# EUROPEAN PATENT APPLICATION

(11) **EP 1 980 999 A1**
(43) Date of publication of application: **15.10.2008**
(21) Application number: 07105894.5
(22) Date of filing: 10.04.2007
(51) Int. Cl.: G06T 17/40, G06F 3/01

(54) **An augmented reality image system, a method and a computer program product**

(71) Applicant: Nederlandse Organisatie voor Toegepast-Natuurwetenschappelijk Onderzoek TNO, 2628 VK Delft (NL)
(72) Inventor: van Berlo, Leonardus Andreas Henricus Maria, 2548 CN Den Haag (NL)
(74) Representative: van Loon, C.J.J.

(57) **Abstract**

The invention relates to an augmented reality image system for composing an augmented reality image by superposing a virtual image over a reality image. The virtual image is constructed in dependence of a position and orientation of a user's head relative to a reality image field of view. The system comprises at least two separate localization systems for determining the relative position and orientation of the user's head.

## Description

The invention relates to an augmented reality image system for composing an augmented reality image by superposing a virtual image over a reality image, the virtual image being constructed in dependence of a position and orientation of a user's head relative to a reality image field of view.

Virtual reality systems are known projecting a single virtual reality image that can be seen by users within their own specific environment. Virtual reality environments are typically fully immersive.

Augmented reality is a technology that enhances a person's view of the real world with virtual content such as imagery text and/or virtual, e.g. three-dimensional, objects. With augmented reality, the user has a view of the real environment that is superposed by a virtual image that is matched with the reality image perceived by the user, thereby obtaining a combined, augmented reality image. In practice, the user typically bears a head-mounted display having the appearance of a normal pair of glasses through which a user sees the environment and on which the virtual image is projected.

In order to spatially match the virtual image, the known augmented reality image system comprises a localization system for determining a position and orientation of a user's head relative to a reality image field of view, the real world. If a user moves in the reality image field or turns the head, the change of position and/or orientation is detected by the localization system, so that a virtual image can be constructed in dependence of the determined relative position and orientation of the user's head, thereby matching with the reality image perceived by the user.

Above described augmented reality image systems are used in defense systems and vehicles, like air born fighters and military ground vehicles.

Generally, such known augmented reality systems therefore have a head mounted display comprising a display device and a locator or tracker device, sometimes supported by one or more field installed passive or active beacons, and a processing unit for processing position data, orientation data and virtual image data in order to calculate in real time the virtual image for overlay.

One of the major drawbacks in such known systems is that the determination of the position and orientation of the head mounted display is not acceptably precise in order to provide a proper virtual overlay on the reality image wherein the user is not disturbed by misfits, offsets, relative picture motion, picture vibration and/or flickering. In an open field application or on relatively large sites, the system fails to generate a true fitting overlay.

Accordingly, it is an object of the invention to provide an improved augmented reality image system that overcomes the above-mentioned drawback. In more detail, the object of the current invention is to provide an augmented reality image system wherein the spatial matching of the reality image and virtual image is improved.

In order to reach the object of current invention, an augmented reality image system for composing an augmented reality image is provided wherein the system comprises at least two separate localization systems for determining the relative position and orientation of the user's head.

Further, the invention relates to a method for composing augmented reality images, the method comprising the steps of determining a position and orientation of a user's head relative to a reality image field of view, constructing a virtual image in dependence of the determined relative position and orientation of the user's head, and superposing the virtual image over a reality image, wherein the determining step is performed by using at least two separate localisation systems.

Additionally, the invention relates to a computer program product for augmented reality, which computer program product comprises instructions for causing a processor to perform the steps of: determining a position and orientation of a user's head relative to a reality image field of view, constructing a virtual image in dependence of the determined relative position and orientation of the user's head, and superposing the virtual image over the reality image, wherein the determining step is performed by using at least two separate localisation systems.

Other advantageous embodiments according to the invention are described in the following claims.

It is noted that in the description and in the claims, the terms "reality image" and "field of vision image" both refer to an image the user of the augmented reality image system would see if he/she was not using said system. It is thus referring to the real world as it is visually experienced by the user.

It is further noted that in the description and in the claims, the term "virtual image" refers to a synthetic image that is constructed for superposing over the reality image, so that it can be seen by the user and can be experienced as if it represented at least part of a reality image, although it remains a synthetic image that is generated from synthetic or processed video data.

By way of example only, embodiments of the present invention will now be described with reference to the accompanying figures in which:
Fig.1 shows a schematic view of a first embodiment of an augmented reality image system;
Fig. 2 shows a schematic view of a second embodiment of an augmented reality image system; and
Fig. 3 shows a schematic view of a composed augmented reality image.

The figures are merely schematic views of preferred embodiments according to the invention. In the figures, the same reference numbers refer to equal or corresponding parts.

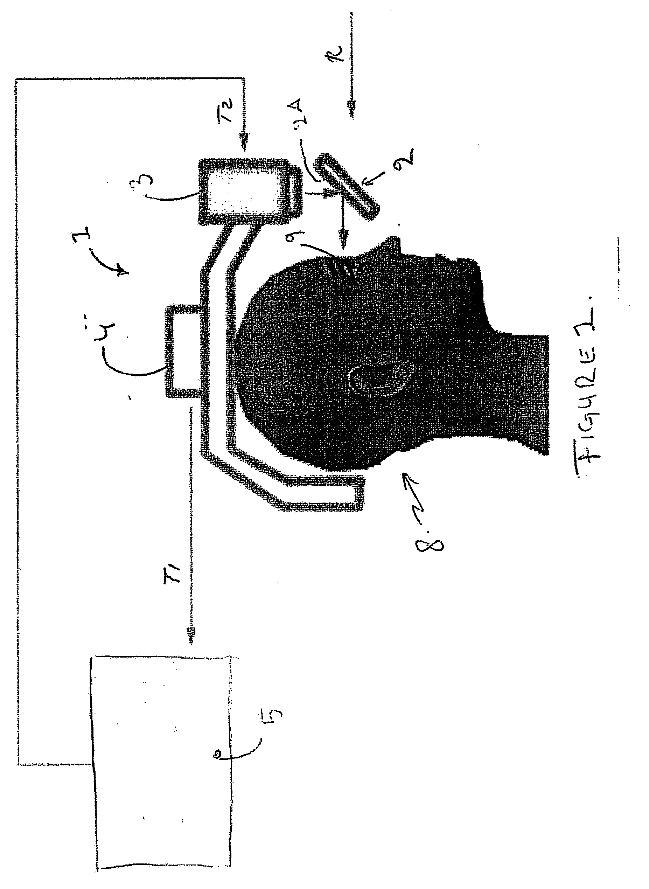

Figure 1 shows a schematic view of a first embodiment of an augmented reality image system 1. The system 1 comprises a display device 2 that can be mounted to the head 8 of user. During use of the system 1, the display device 2 composes an optical augmented reality image by overlaying a virtual image over, on top of a reality image. The virtual image is projected by a projector 3 that is provided on the display device 2. The display device 2 further has a projection surface element to be placed in front of a user's eyes for observing the reality image. The element is partly transparent to the reality image, the field of vision image R, and partly opaque, viz, for projection purposes of the virtual image. The partly transparent element 2a is implemented as a half transparent mirror 2a, on which the virtual image is projected on a first side and through which the real world on an opposite side of the mirror can be simultaneously observed by the user. The projecting surface element can also be implemented otherwise, e.g. as a shutter device, preferably having a shutting frequency that is above the maximum perception frequency of the human eye in order to avoid flicker. The eyes 9 of the user can observe a reality image of the real world through the shutter when the shutter is in an open position, while in a shut position of the shutter, the eyes 9 of the user can observe the virtual image which is projected on the shut surface element facing the eyes 9 of the user.

Alternatively, the display device can project the virtual image directly into the eye 9 upon the retina..

Further, the system 1 comprises a location tracker 4 for determining a position and orientation of the user's head 8 relative to a reality image field of view. The location tracker 4 is connected to an external processor 5 via a transmitter receiver assembly. The position and orientation information is thus transmitted to the processor 5, the information transmission symbolically denoted by transmission T1. The processor 5 processes position and orientation information and constructs a location and orientation dependent virtual image from a virtual, preferably three-dimensional, structure. Thus, a virtual image is obtained that matches with the reality image R that the user actually experiences. The virtual image is generated on a real time basis and sent to the projector 3, symbolically denoted by transmission T2, so that the virtual image is substantially simultaneously projected to overlay the reality image. The user of the system 1 according to the invention thus experiences a combined picture of a real and virtual image on corresponding positions in the real world. Upon changes position and/or orientation of the head the virtual elements stay in the user's perception on the very same location.

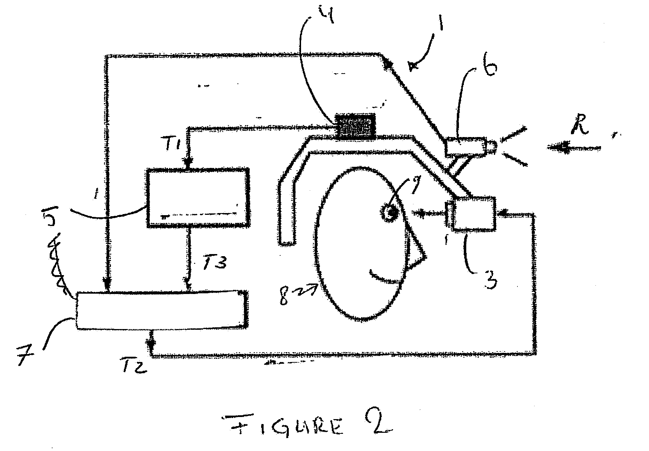

Figure 2 shows a schematic view of a second embodiment of an augmented reality image system 1 according to the invention. Here, the system is video assisted. The projector 3 is arranged for projecting the virtual image directly into the eye 9 of the user. As described above, the projector 3 can also be arranged for projecting the virtual image onto a partly transparent projecting surface element. The system 1 in Figure 2 the projector not merely projects the virtual image but a composed image comprising a matched virtual image and reality image. Thereto, the system 1 comprises a head mounted video camera 6 registering the field of vision image, which is combined with the virtual overlay as described above and then projected directly through projecting device 3 in one or more eyes of the user. Again, the virtual image is constructed by the processor 5 in dependence of retrieved position and orientation information of the user's head 8 and based on a three dimensional virtual structure. The virtual image is then transmitted, symbolically denoted by transmission T3 to a further processor 6 which composes the video augmented reality image by superposing the virtual image over the reality image generated by the video camera 6. The composition of a combined picture of the field of vision image and the virtual image overlay can be performed digitally. An advantage of video augmentation is the ease of correction of the intensity of the incoming light in the reality image, which can be performed instantaneously on a real time basis.

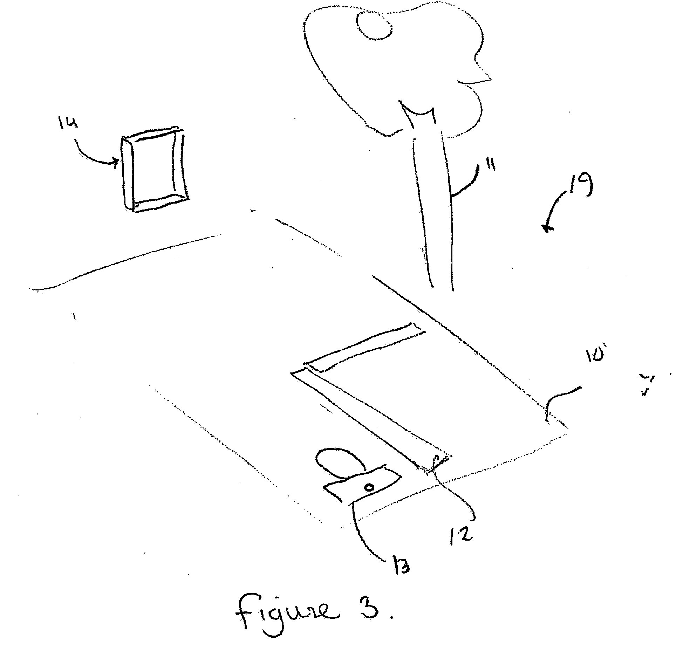

Figure 3 shows a schematic view on a projection of construction data, e.g. an engineering drawing, being the virtual image, upon a construction site, being the reality image. In this figure, the field of vision image 19, being the real world 19, is a construction site where a tree 11 and a concrete slab 10 are shown, which slab forms the base of a building to be built, upon which slab 10 lines 12, 13 are projected representing future building elements, such as a wall base 12 and a toilet base 13. Further, a future window 14 is shown. By use of the augmented reality image system 1 according to the invention, a worker on the construction site can determine where different construction elements and/or provisions need to be located, where specific adaptations to a structure need to be performed and/or where specific holes need to be drilled without the need of additional measurements. The worker can therefore arrange a construction element or provision on a planned location. The advantage of using the system 1 according to the invention for use in construction or civil work sites is that the step of measuring all the different locations of the different construction elements or provisions need no longer be performed as a separate step. Thus, valuable time is saved, the construction can be carried out much faster and errors during construction can be directly identified and corrected. Further, the localisation might be more precise since the angles of the virtual image are computer-generated projections that can be more accurate than angle measurements currently performed at construction sites. In an embodiment according to the invention, virtual image components of the augmented reality image system are visualized at the work site, e.g. by drawing lines.

Furthermore, by projecting virtual construction elements like a window 14 on the field of vision image of a construction worker, the user of the system 1 according to the invention is more facilitated in deciding a work procedure to realize the drawings and engineering plans.

Another advantage of the invention is that different engineering drawings or plans can be combined, thus preventing any collisions or clashes of different structural elements such as for example collisions of electric wiring and the water supply pipes. Accordingly a better oversight for the architect or the construction manager is obtained.

A further advantage is that in multidisciplinary overviews, where different drawings are virtually overlaid over the field of vision image, different contractors for the different disciplines can cooperate more smoothly.

Another advantage is that the order and location of prefabricated elements can be visualised beforehand, thus enabling a better logistic planning. The representation of a virtual building like a house on an actual construction site is furthermore a very good selling tool to the final or potential customer, who is getting a more rapid insight in the future building. The generation of as-built drawings in industrial works is rendered more simple since the differences between engineering drawings and reality, i.e. as-built can be easily spotted and incorporated in the as-built drawings.

Preferably, the system 1 can always supply any drawing by storing all construction drawings in a data storage device of the system 1.

An even further advantage of use of the system 1 at construction sites is that additional information can be transposed upon drawings so that controls and checks performed by supervisors are more practical. The workers no longer need a plumb line, since the virtual image can exactly provide vertical lines and no thread for horizontal masonry is needed any longer. Accordingly, measurement can be performed without rulers or tape measure. Essential lines for construction placing can be redrawn or drawn from the virtual projection upon construction elements during the construction phase. Another advantage is that concrete filling heights and surfaces can be monitored during filling. Virtually placing construction elements within the real world will enhance the creativity of architects in planning and designing new structures. With the system of current invention virtually placing a complete structure can help convincing local authorities on the relative impact on the surroundings of new projects.

The system according to the invention can also be used in video games, in defense applications for soldiers, for vehicle operating persons, in the field of surgery, to get a look through vision of tissues to know where and how to incise, in the field of home decoration to virtually decorate and thus to select the optimal decoration, in engineering and architecture to virtually display future constructions, in the field of manufacturing in order to visualize manufacturing steps for the workers or for designing optimal manufacturing processes.

In order to match the virtual image overlay on the field of vision image in the perception of the user, a reliable determination of the position and orientation of the user's head with respect to a reality image field of view is essential. Here, both the location (e.g. x,y,z) and the orientation in all three axes (e.g. pitch, roll and yaw) need to be determined minutely on a real time basis. In order to perform the determination step, the locator device 4, also called head tracker, comprises at least two localization systems.

The locator device 4 can determine the position magnetically, optically and/or with electromagnetic or ultrasonic waves. In these methods, a direct measurement, a reflection or an interference measurement can be performed. The position determination can thus be performed by a transmitter receiver system where the transmitter, receiver and/or reflector can be placed in the surroundings as beacons and/or on a head mountable element.

Thus, the direct, interference or reflective measurements can be performed out side in, by active transmitting beacons placed in a surrounding, wherein a head mountable element may have a receiver and optionally a position processing device. The transmitting beacons thus are building a grid in which a receiver element registers its position. GPS (Global Positioning System) is a typical example for this kind of positioning systems.

Measurements can also be performed inside out, wherein receiver elements are positioned in the surroundings, and an active transmitter is located and optionally integrated in a head mountable element. In this case, the head mountable element can also be equipped with a position processing device that is coupled to both the beacons and to the projector 3 in order to transfer the externally obtained location data into a virtual image at the projection surface 2a.

Also regarding interference or reflective measurements, a reflector can be, outside in, mounted on a head mounted element, and an active transmitter and receiver in the surroundings or inside out, meaning that active transmitting and receiving elements are mounted on head mountable elements and that a reflecting element is placed in the surroundings.

The orientation of the user's head can further be performed by measuring inertia forces with differential motion registration using inertia sensors. These inertia sensors can for example be a set of orthogonal gyroscopes. However, the orientation of the user's head can also be determined by using position information of the head, e.g. by comparing positions of different head parts.

In order to determine the position of the head of the user at least three points fixed to the head need to be located. By these three point location the roll pitch and yaw can be determined and the positions of the eyes with respect to the head can de deduced. It is noted that a second, separate location system is used to further precise the determination of the positions of the head and the eyes of the user. A first location system can e.g. be an acoustic system using ultrasound reflectors on little poles upon a head mountable element, and a second location system can e.g. be a set of orthogonal inertia motion detecting devices. Thus, from real time data of the acoustic system, say in a positioning frequency well above the visual response frequency, can be corrected with the inertia motion detection device. If the inertia motion device is a set of orthogonal gyroscopes, also rotations of the head can be registered and corrected. A correction can be on a position specific interpolation of both data or on a time specific interpolation of the data.

Also, various interpolation techniques can be applied to incorporate a predicting element in the location determination. The motion registration can also be performed additionally with sensors on the body of the user, registering muscle tension and muscle movement, which can be related through specific human motion models to calculate the actual motion of the head.

The second system can also be an infrared system having three additional points fixed to the head. Those points can again be reflectors, transmitters or receivers. In principle, any first localization system can be combined with a second localization system. Preferably, localization systems based on different physical principles are used in the system, thereby improving the accuracy of the position and orientation measurement, so that a matching error of the virtual image with respect to the reality image is reduced. Alternatively, separate localization systems that are based on the same physical principle can be operated differently, e.g. by employing separate spectral regions. Further, it is noted that by using at least two separate localization systems for determining the relative position and orientation of the user's head, the reliability of the position and orientation information is improved, thereby stabilizing the system during use.

Optionally, the one or more processors and the tracker device are in continuous communication with each other, in order to calculate on a real time basis from a data storage device having the virtual image data and from the position data of the tracker device a virtual image that fits on the field of vision image. The data communication between the tracker device and the one or more processors can e.g. be arranged via a wire connection, via an optical cable or wireless through a receiver transmitter assembly.

Similarly, the projector obtains the virtual images from the processors, either by a wire connection, through an optical cable or wireless by a receiver transmitter assembly.

The steps of determining a user's head position and orientation relative to a reality image field of view, constructing a virtual image and superposing the virtual image over a reality image can be performed either by using one or more hardware components, one or more software components, or combinations of both.

The invention is not restricted to the embodiments described herein. It will be understood that many variants are possible.

As the person skilled in the art knows, other display systems can be employed for displaying the virtual image and the field of vision image and the retrieving data from objects. For instance liquid crystal displays, laser generated displays, and/or plasma generated displays might be used without departing from the spirit of the current invention.

Instead of using two separate localisation systems, also more separate localisation systems can be used, e.g. three, four or more.

Other variants will be obvious for the person skilled in the art and are considered to lie within the scope of the invention as formulated in the following claims.

## Claims

1. An augmented reality image system for composing an augmented reality image by superposing a virtual image over a reality image, the virtual image being constructed in dependence of a position and orientation of a user's head relative to a reality image field of view, wherein the system comprises at least two separate localization systems for determining the relative position and orientation of the user's head.

2. An augmented reality image system according to claim 1, further comprising a display device having a projection surface element for placing in front of the user's eyes such that a reality image is obtained, wherein the display device is further arranged for displaying a projected virtual image on the partly transparent element.

3. An augmented reality image system according to claims 1 or 2, wherein a location system comprises a magnetic, electromagnetic, inertial, ultrasonic and/or optical localization element.

4. An augmented reality image system according to any of the previous claims, wherein the separate localization systems are based on different physical principles.

5. An augmented reality image system according to any of the previous claims, wherein a location system comprises head mountable elements.

6. An augmented reality image system according to any of the previous claims, further comprising a processor for constructing virtual images.

7. A method for composing augmented reality images, the method comprising the steps of:
- determining a position and orientation of a user's head relative to a reality image field of view;
- constructing a virtual image in dependence of the determined relative position and orientation of the user's head; and
- superposing the virtual image over a reality image;
wherein the determining step is performed by using at least two separate localization systems.

8. A method according to claim 7, wherein the construction step comprises retrieving data of a virtual structure and generating the virtual image by using both the retrieved data of the virtual structure and position and orientation information of the head of the user.

9. A method according to claim 7 or 8, for use in construction or civil work sites, wherein the virtual image comprises construction data.

10. A method according to claim 9, further comprising arranging a construction element or provision on the work site.

11. A method according to claim 9 or 10, further comprising visualizing virtual image components at the work site.

12. A computer program product for augmented reality, which computer program product comprises instructions for causing a processor to perform the steps of:
- determining a position and orientation of a user's head relative to a reality image field of view;
- constructing a virtual image in dependence of the determined relative position and orientation of the user's head; and
- superposing the virtual image over a reality image,
wherein the determining step is performed by using at least two separate localization systems.
